Europäisches Patentamt

European Patent Office

Office européen des brevets

(11) Veröffentlichungsnummer: **0 304 005**

**A1**

(12) **EUROPÄISCHE PATENTANMELDUNG**

(21) Anmeldenummer: 88113252.6

(22) Anmeldetag: 16.08.88

(51) Int. Cl.⁴: **C08J 5/04 , C08J 5/24 , B32B 27/40**

(30) Priorität: 20.08.87 DE 3727770
20.11.87 DE 3739327

(43) Veröffentlichungstag der Anmeldung:
22.02.89 Patentblatt 89/08

(84) Benannte Vertragsstaaten:
AT BE CH DE ES FR GB GR IT LI LU NL SE

(71) Anmelder: **Pelzer, Helmut**
**Neue Strasse 5**
**D-5804 Herdecke-Ende(DE)**

(72) Erfinder: **Pelzer, Helmut**
**Neue Strasse 5**
**D-5804 Herdecke-Ende(DE)**

(74) Vertreter: **Schneider, Wilhelm, Dipl.-Phys.**
**Danziger Weg 9**
**D-3052 Bad Nenndorf(DE)**

(54) **Faserverstärkter Werkstoff und Verfahren zu seiner Herstellung.**

(57) Um einen faserverstärkten, hoch temperaturstabilen Werkstoff für die Verarbeitung im Kraftfahrzeugbereich zu schaffen, der preiswert und leicht herzustellen ist, wird vorgeschlagen, daß eine aus einem Fasergebilde bestehene Matrix von einem duroplastischen Bindemittel auf Basis hochvernetzter, trimerisierter Polyurethan-Polyisocyanurate umhüllt ist. In einem verbesserten Verfahren wird das Fasermaterial unter Anwesenheit eines Katalysators mit einer Matrix in situ getränkt, wobei das Matrixmaterial im wesentlichen aus dem Reaktionsprodukt MDI und einer Mischung von Kettenverlängeren besteht und Katalysatoren eingesetzt werden, die sowohl die Polyadditionsreaktion als auch die Trimerisierungsreaktion des eingesetzten Diisocyanates beeinflussen und der Tränkvorgang und der Reaktionsablauf werden unter erhöhter Temperatur und gegenüber Atmosphärendruck erhöhtem Druck durchgeführt.

## Faserverstärkter Werkstoff und Verfahren zu seiner Herstellung

Die Erfindung betrifft einen faserverstärkten, hoch temperaturstabilen plattenförmigen Werkstoff, insbesondere für die Kapselung von Motorräumen, für Abdeckungen im Bereich von Schalldämpferanlagen, Deckel für Maschinenteile, Trennwände oder dergleichen bei Kraftfahrzeugen.

Es sind solche Werkstoffe bekannt, bei denen als Bindemittel für die Matrix aus Fasermaterial thermoplastische Kunststoffe eingesetzt werden. Solche Werkstoffe haben den Nachteil, daß sie bruchanfällig sind und insbesondere für die gewünschten Einsatzzwecke, wie Motorraumkapselung, Abdeckungen im Bereich von Schalldämpferanlagen, akustische oder thermische Abschirmung, mechanische Abschirmung zur Cw Wert-Verbesserung, Deckel für Maschinenteile mit hohen Wärmebelastungen und/oder akustische Abschirmung, Trennwände, sämtliche Einsatzzwecke im Kfz-Bereich, sich als wenig brauchbar erwiesen haben.

Desweiteren sind als Bindemittel auch duroplastische Materialien bekannt, die aber keine ausreichende Temperaturbeständigkeit besitzen.

Ausgehend von diesem Stand der Technik liegt der Erfindung die Aufgabe zugrunde, einen Werkstoff gattungsgemäßer Art zu schaffen, der preiswert herzustellen, leicht verarbeitbar und hoch temperaturbeständig ist, wobei zudem keine Nachhärtung des Werkstoffes erforderlich sein soll.

Zur Lösung dieser Aufgabe schlägt die Erfindung vor, daß die aus dem Fasergebilde bestehende Matrix von einem duroplastischen Bindemittel auf Basis hochvernetzter, trimerisierter Polyurethan-Polyisocyanurate umhüllt ist.

Durch Einsatz des erfindungsgemäßen Bindemittels wird ein Werkstoff geschaffen, der hohe Temperaturbeständigkeit besitzt und darüber hinaus hochfest und schlagzäh ist, wobei eine Nachhärtung dieses Werkstoffes nicht erforderlich ist. Die Verarbeitung ist äußerst preisgünstig und sehr leicht durchzuführen, wobei die aus diesem Werkstoff hergestellten Teile auch nachträglich verformbar sind und insbesondere beim Einbau nicht bruchanfällig sind.

Bevorzugt ist vorgesehen, daß die Matrix aus mindestens einem folgender Bestandteil besteht: Glasfaser, Kohlenstoffaser, aromatische Polyamidfaser, synthetische Faserwerkstoffe, in Form von Matten , Geweben, Gelegen bzw. Gewirken.

Des weiteren ist vorgesehen, daß die Matrix mit der Umhüllung als plattenförmiges Element ausgebildet ist.

Um über die Eigenschaften des Werkstoffes selbst hinaus noch eine bessere thermische und/oder akustische Dämmung zu erreichen, wird vorgeschlagen, daß mindestens eine Fläche des plattenförmigen Elementes eine Schicht aus Dämmaterial aufweist, welche mit dem Umhüllungsmaterial verbunden ist.

Ein bevorzugtes Verfahren zur Herstellung eines Werkstoffes nach einem der Ansprüche 1 bis 4 besteht darin, daß in ein Formnest der Matrixwerkstoff eingebracht und lagerichtig gehaltert wird, nachfolgend das Bindemittel als Zweikomponenten-System in flüssiger, vermischter Form in das auf ca. 40° bis 140° C, insbesondere 100° bis 120° C vorgewärmte Formnest injiziert wird und der Formling nach einer von der Formnesttemperatur abhängigen Ver weilzeit von zwischen ca. 5 bis 60 Sekunden entformt wird.

Ein Ausführungsbeispiel der Erfindung ist in der Zeichnung dargestellt und im folgenden näher beschrieben.

Es zeigt:

Fig. 1 eine Platte aus dem erfindungsgemäßen Werkstoff;

Fig. 2 desgleichen im Schnitt II-II der Figur 1 gesehen.

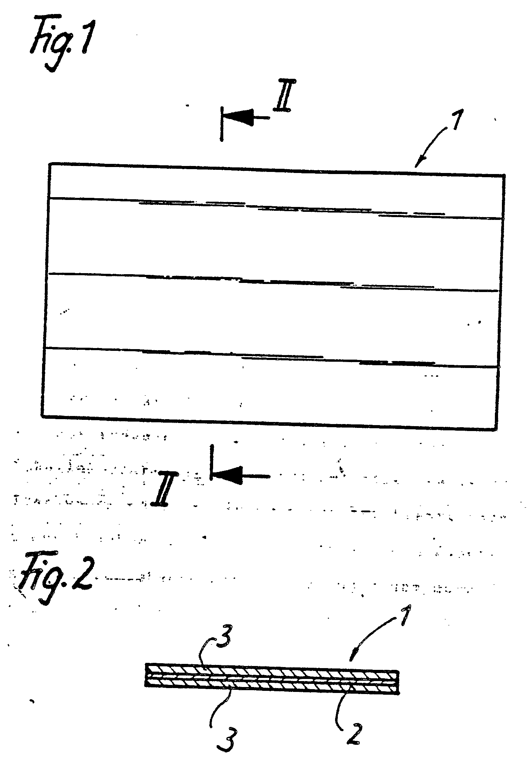

Die Platte 1 besteht aus hoch temperaturstabilem Werkstoff und kann bei entsprechender Formgebung zum Beispiel für die Kapselung von Motorräumen an Kfz. eingesetzt werden. Weitere Einsatzorte können Abdeckungen im Bereich von Schalldämpferanlagen, akustische Abschirmungen, thermische Abschirmungen, mechanische Abschirmungen, insbesondere zur Cw Wert-Verbesserung, Deckel für Maschinenteile mit hoher Wärmebelastung und/oder akustischer Abschirmung, Trennwände und dergleichen, sämtlich im Kfz-Bau sein.

In der Platte 1 ist eine Matrix 2 aus Faserwerkstoff eingebettet, wobei die Matrix aus einem folgender Bestandteile oder deren Mischungen bestehen kann:

Glasfasermatten, Kohlenstoffasern, aromatische Polyamidfasern, synthetische Faserwerkstoffe, sämtliche Materialien in Mattenform, Gewebeform, Gelegeform oder Gewirkform.

Die Matrix 2 ist von einem duroplastischen Bindemittel 3 auf der Basis hochvernetzter, trimerisierter Polyurethan-Polyisocyanorate umhüllt. Während die Herstellung des Werkstoffes, beispielsweise in Plattenform, können andere Elemente in die Oberfläche des Bindemittels mit eingeformt werden, so zum Beispiel Dämmaterialien (thermisch und/oder akustisch), wobei diese Materialien auf der späteren Innenfläche bzw. Außenfläche der Platte angeordnet sein können. Die Anordnung ist je nach Einbauort entsprechen zu wählen.

Zur Herstellung eines solchen Werkstoffes bzw. einer aus solchem Werkstoff gefertigten Platte wird in ein offenes oder geschlossenes Formnest der Matrixwerkstoff in geeigneter und gewünschter Art eingebracht und gege benenfalls lagerichtig gehaltert. Das Formnest wird dann auf eine Temperatur zwischen 40° und 140° C, vorzugsweise zwischen 100° und 120° erwärmtund dann das Matrix-Bindemittel auf Basis hochvernetzter, trimerisierter Polyurethan-Polyisocyanurate injiziert. Dabei wird dieses Bindemittel als Zweikomponenten-System einer A- und einer B-Komponente in flüssiger Form durch Mischung auf üblichen geeigneten Zweikomponenten-Dosieranlagen vorbereitet und anschließend in die Form gefüllt. Bei den vorgenannten Formnest-Temperaturen erfolgt unter dem üblichen Preßdruck eine Reaktion des eingetragenen Gemisches innerhalb einer Zeit von 1 bis 30 Sekunden. Es wird dabei ein hochfester, schlagzäher Werkstoff geschaffen. Die Entformzeiten dieser Formkörper liegen zwischen 5 und 60 Sekunden. Ein Nachhärten dieses Werkstoffes ist nicht erforderlich.

Es wurden nach der Erfindung Probeplatten der Abmessung 200 x 200 x 2,3 mm hergestellt und hinsichtlich ihrer Eigenschaften überprüft. Beim Einsatz einer Matrix aus zwei Lagen Glasvlies von 450 g/m² wurde ein Biege-E Modul von 3342 N/mm², eine Izod Schlagzähigkeit bei RT von 69 - 99 KJ/m² und bei 40° C von 54 bis 61 KJ/m² gemessen. Die Temperaturbeständigkeit ergab folgende Werte:

(sag-Test 4 h) > 230° c
Dichte        0,98 g/cm³
Flächengewicht    2,25 g/cm²

Eine weitere Probeplatte wurde mit 4 Lagen Glasvlies ausgestattet und ergab eine Schlagzähigkeit bei Raumtemperatur von 130 KJ/m². Beim sag-Test ergab sich über zwei Stunden kein Abfall der Werte.

Die Herstellungsparameter für die Probeplatten waren folgende:

Formtemperatur    ca 100° C
Preßdruck    ca 300 bar
Entformzeit    <20 sec.

Bei der Herstellung der Probeplatten wurde für das Bindemittel folgende Rezeptur verwendet:

Arcopol DS 25    100.00
Kaliumacetat
(30%ig in EG)    1,50
DBTDL    0,10
Suprasec VM50    160,00

Die Erfindung ist nicht auf die Ausführungsbeispiele beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

Weiterer Gegenstand der Erfindung ist ein verbessertes Verfahren zum Herstellen eines faserverstärkten, duroplastischen Werkstoffes insbesondere eines Werkstoffes der eingangs beschriebenen Art gemäß der Aufgabe dieser Erfindung.

Gemäß dem verbesserten Verfahren werden Fasermaterialien unter Anwesenheit eines Katalysators mit einer Matrix in situ getränkt, wobei das Matrixmaterial im wesentlichen aus dem Reaktionsprodukt MDI, roh oder modifiziert, und schung aus Kettenverlängerern wie difunktionelle, Hydroxylgruppen enthaltende Verbindungen z.B. 1,2 Propylenglykol, Diäthylenglykol (DEG), Dipropylenglykol (DPG), Polyäthylenglykol (PEG) unterschiedlicher Molekulargewichte und/oder ebensolche auf Basis von Aminen und Polyaminen dargestellten, reaktiven Verbindungen, wobei ferner Katalysatoren eingesetzt werden, die sowohl die Polyadditionsreaktion aus Hydroxyl- und/oder Amingruppen als auch die Trimerisierungsreaktion des eingesetzten Diisocyanates, wie 4´4´-Diphenylmethandiisocyanat, 2,4-Toluylendiisocyanat, 2,6-Toluylendiisocyanat, sowie durch intermediäre Reaktion zur Molekularbeeinflussung und Reaktivitätsbeeinflussung daraus hergestellter, sogenannter Prepolymere beeinflussen, und daß der Tränkvorgang und der Reaktionsablauf unter erhöhter Temperatur von insbesondere 70° bis 130° C und gegenüber Atmosphärendruck erhöhtem Druck von insbesondere 0,1 bis 5 bar durchgeführt wird, so daß als Verfahrensprodukt ein kompaktes Werkstück aus faserverstärktem Polyurethan, Polyisocyanat, Mischungen daraus oder Polyharnstoff gebildet wird.

In Weiterbildung wird vorgeschlagen, daß die Fasermaterialien durch Glasfasermatten aus endlos und/oder Stapelfasern, die thermoplastisch, duroplastisch und/oder mechanisch gebunden werden, gebildet werden.

Weiterhin ist vorteilhaft, wenn auf ausgewählte Bereiche des Werkstoffes Isolations- und/oder Reflexionsmaterialien aufgelegt, und insbesondere durch die Reaktionsprodukte fixiert werden.

Bevorzugt ist vorgesehen, daß die Fasermaterialien in eine Form eingelegt und mit Matrixmaterial ggf. unter Anwesenheit der Katalysatoren beschichtet werden, daß dann die Form geschlossen wird und unter Wärmezufuhr und Druckaufgabe die Durchtränkung des Fasermaterials bei gleizeitigem Reaktionsablauf erfolgt.

Die so hergestellten Werkstoffe lassen sich in geeigneten Formen aus glasfaserverstärktem Kunststoff, Aluminium oder Stahl bei für die Reaktion notwendigen Temperaturen pressen und härten. Durch den Preßdruck wird erreicht, daß die CO₂-Reaktion unterbunden wird und kein schaumartiges Material, sondern eine kompakte Werkstoffschicht erzeugt wird. In Abhängigkeit von der Dicke der Werkstoffschicht ist die Temperatur und der Druck auf die höheren Werte anzuheben.

Die erhaltenen Werkstoffe sind je nach Reaktionsführung und Fasergehalt flexibel bis hart-spröde. Sie sind einsetzbar bei Temperaturen bis zu 300°C.

Durch Applikation geeigneter Isolations- und/oder Reflexionsmaterialien sind Temperaturbelastungen in den ausgegewählten Bereichen auch über längere Zeit bis zu 500°C möglich.

Bei der Anwendung von Aminen und Polyaminen ist der Einsatz eines zusätzlichen Katalysators nicht erforderlich.

Durch das erfindungsgemäße Verfahren wird ein neuer Werkstoff geschaffen, der kostengünstig herzustellen ist und durch seine Temperaturbeständigkeit ein weites Einsatzfeld haben kann. Insbesondere ist es möglich, aus diesem Werkstoff Unterschilde oder Trägerteile für Kraftfahrzeuge herzustellen, insbesondere auch in solchen Bereichen, die hochtemperaturbelastet sind, beispielsweise im Bereich des Motorraumes und der Abgasführung.

**Ansprüche**

1.) Faserverstärkter, hoch temperaturstabiler, plattenförmiger Werkstoff, insbesondere für die Kapselung von Motorräumen, für Abdeckungen im Bereich von Schalldämpferanlagen, Deckel für Maschinenteile, Trennwände oder dergleichen bei Krafrfahrzeugen,
**dadurch gekennzeichnet,**
daß die aus dem Fasergebilde bestehende Matrix (2) von einem duroplastischen Bindemittel (3) auf Basis hochvernetzter, trimerisierter Polyurethan-Polyisocyanurate umhüllt ist.

2.) Werkstoff nach Anspruch 1,
**dadurch gekennzeichnet,**
daß die Matrix (2) aus mindestens einem folgender Bestandteile besteht:
Glasfaser, Kohlenstoffaser, aromatische Polyamidfaser synthetische Faserwerkstoffe, in Form von Matten, Ge weben, Gelegen bzw. Gewirken.

3.) Werkstoff nach Anspruch 1 oder 2,
**dadurch gekennzeichnet,**
daß die Matrix (2) mit der Umhüllung (3) als plattenförmiges Element (1) ausgebildet ist.

4.) Werkstoff nach Anspruch 3,
**dadurch gekennzeichnet,**
daß mindestens eine Fläche des plattenförmigen Elementes (1) eine Schicht aus Dämmaterial aufweist, welche mit dem Umhüllungsmaterial (3) verbunden ist.

5.) Verfahren zum Herstellen eines Werkstoffes nach einem der Ansprüche 1 bis 4,
**dadurch gekennzeichnet,**
daß in ein Formnest der Matrixwerkstoff eingebracht und lagerichtig gehalten wird, nachfolgend das Bindemittel als Zweikomponenten-System in flüssiger, vermischter Form in das auf ca. 40° bis 140°C, insbesondere 100° bis 120°C, vorgewärmte Formnest injiziert wird und der Formling nach einer von der Formnesttemperatur abhängigen Verweilzeit von zwischen ca. 5 und 60 Sekunden entformt wird.

6.) Verfahren zur Herstellung eines faserverstärkten, duroplastischen Werkstoffes,
**dadurch gekennzeichnet,**
daß Fasermaterialien unter Anwesenheit eines Katalysators mit einer Matrix in situ getränkt werden, wobei das Matrixmaterial im wesentlichen aus dem Reaktionsprodukt MDI, roh oder modifiziert, und einer Mischung aus Kettenverlängerern wie difunktionelle, Hydroxylgruppen enthaltenden Verbindungen, z.B. 1,2 Propylenglykol, Diäthylenglykol (DEG), Dipropylenglykol (DPG), Polyäthylenglykol (PEG) unterschiedlicher Molekulargewichte und/oder ebensolche auf Basis von Aminen und Polyaminen dargestellten, reaktiven Verbindungen, wobei ferner Katalysatoren eingesetzt werden, die sowohl die Polyadditionsreaktion aus Hydroxyl- und/oder Amingruppen als auch die Trimerisierungsreaktion des eingesetzten Diisocyanates, wie 4'4'-Diphenylmethandiisocyanat, 2,4-Toluylendiisocyanat, 2,6-Toluyldiisocyanat, sowie durch intermediäre Reaktion zur Molekularbeeinflussung und Reaktivitätsbeeinflussung daraus hergestellter, sogenannter Prepolymere beeinflussen, und daß der Tränkvorgang und der Reaktionsablauf unter erhöhter Temperatur von insbesondere 70° bis 130°C und gegenüber Atmosphärendruck erhöhtem Druck von insbesondere 0,1 bis 5 bar durchgeführt wird, so daß als Verfahrensprodukt ein kompaktes Werkstück aus faserverstärktem Polyurethan, Polyisocyanat, Mischungen daraus oder Polyharnstoff gebildet wird.

7.) Verfahren nach Anspruch 6,
**dadurch gekennzeichnet,**
daß die Fasermaterialien durch Glasfasermatten aus endlos und/oder Stapelfasern, die thermoplastisch, duroplastisch und/oder mechanisch gebunden werden, gebildet werden.

8.) Verfahren nach Anspruch 6 oder 7,
**dadurch gekennzeichnet,**
daß auf ausgewählte Bereiche des Werkstoffes Isolations- und/oder Reflexionsmaterialien aufgelegt und insbesondere durch die Reaktionsprodukte fixiert werden.

9.) Verfahren nach einem der Ansprüche 6 bis 8,
**dadurch gekennzeichnet,**
daß die Fasermaterialien in eine Form eingelegt und mit Matrixmaterial ggf. unter Anwesenheit von Katalysatoren beschichtet werden, daß dann die Form geschlossen wird und unter Wärmezufuhr und Druckaufgabe die Durchtränkung des Fasermaterials bei gleichzeitigem Reaktionsablauf erfolgt.

*Fig.1*

II

1

II

*Fig.2*

3

1

3

3

2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 014 899 (ICI) <br> * Ansprüche; Seite 4, Zeilen 5-16, insbesondere Zeile 12; Seite 6, Zeilen 1-10; Seite 13, Zeile 19; Seite 14, Zeilen 7-12; Seite 20, Zeile 19 - Seite 21, Zeile 7; Seite 22, Zeilen 10-15 * | 1-3,6,7 ,9 | C 08 J 5/04 <br> C 08 J 5/24 <br> B 32 B 27/40 |
| A | ---- | 4,5,8 | |
| A | US-A-3 206 352 (MONSANTO) <br> * Ansprüche; Spalte 1, Zeilen 13-15; Spalte 2, Zeile 56; Spalte 3, Zeile 70 - Spalte 4, Zeile 6 * <br> ----- | 1-3 | |

RECHERCHIERTE
SACHGEBIETE (Int. Cl.4)

C 08 J
C 08 K
C 08 G
B 29 C

Der vorliegende Recherchenbericht wurde für alle Patentansprüche erstellt

| Recherchenort | Abschlußdatum der Recherche | Prüfer |
|---|---|---|
| DEN HAAG | 22-09-1988 | NILSSON |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)